# EUROPEAN PATENT APPLICATION

(11) **EP 4 254 553 A1**
(43) Date of publication of application: **04.10.2023**
(21) Application number: 22739795.7
(22) Date of filing: 14.01.2022
(51) Int. Cl.: H01M 4/36, H01M 4/525, H01M 4/505, H01M 4/62, H01M 10/052, C01G 53/00

(54) **POSITIVE ELECTRODE ACTIVE MATERIAL FOR LITHIUM SECONDARY BATTERY, METHOD FOR MANUFACTURING SAME, AND POSITIVE ELECTRODE AND LITHIUM SECONDARY BATTERY COMPRISING SAME**

(30) Priority: 15.01.2021 KR 20210006202
(71) Applicant: LG Energy Solution, Ltd., Seoul 07335 (KR)
(72) Inventor: LHO, Eun-Sol, Daejeon 34122 (KR); DO, Joong-Yeop, Daejeon 34122 (KR); PARK, Kang-Joon, Daejeon 34122 (KR); HAN, Gi-Beom, Daejeon 34122 (KR); KWAK, Min, Daejeon 34122 (KR); PARK, Sang-Min, Daejeon 34122 (KR); LEE, Dae-Jin, Daejeon 34122 (KR); LEE, Sang-Wook, Daejeon 34122 (KR); JUNG, Wang-Mo, Daejeon 34122 (KR)
(74) Representative: Hoffmann Eitle
(86) International application number: PCT/KR2022/000780
(87) International publication number: WO 2022/154603

(57) **Abstract**

The present disclosure discloses a positive electrode active material for a lithium secondary battery comprising secondary micro particles having an average particle size (D50) of 1 to 10 *µ*m formed by agglomeration of primary macro particles having an average particle size (D50) of 0.5 to 3 *µ*m and a lithium-M oxide coating layer on all or part of a surface, wherein M is at least one selected from the group consisting of boron, cobalt, manganese and magnesium; and secondary macro particles having an average particle size (D50) of 5 to 20 *µ*m formed by agglomeration of primary micro particles having a smaller average particle size (D50) than the primary macro particles, wherein the primary macro particles and the primary micro particles are represented by LiₐNi_{1-b-c-d}Co_{b}Mn_{c}Q_{d}O_{2+δ} (1.0≤a≤1.5, 0<b<0.2, 0<c<0.2, 0≤d≤0.1, 0<b+c+d≤0.2, -0.1≤δ≤1.0, Q is at least one type of metal selected from the group consisting of Al, Mg, V, Ti and Zr).

## Description

### TECHNICAL FIELD

The present disclosure relates to a positive electrode active material for a lithium secondary battery comprising primary macro particles and a method for manufacturing the same.

The present application claims priority to Korean Patent Application No. 10-2021-0006202 filed on January 15, 2021, in the Republic of Korea, the disclosure of which is incorporated herein by reference.

### BACKGROUND ART

Recently, with the widespread use of electronic devices using batteries, for example, mobile phones, laptop computers and electric vehicles, there is a fast growing demand for secondary batteries with small size, light weight and relatively high capacity. In particular, lithium secondary batteries are gaining attention as a power source for driving mobile devices due to their light weight and high energy density advantages. Accordingly, there are many efforts to improve the performance of lithium secondary batteries.

A lithium secondary battery includes an organic electrolyte solution or a polymer electrolyte solution filled between a positive electrode and a negative electrode made of an active material capable of intercalating and deintercalating lithium ions, and electrical energy is produced by oxidation and reduction reactions during intercalation/deintercalation of lithium ions at the positive electrode and the negative electrode.

The positive electrode active material of the lithium secondary battery includes lithium cobalt oxide (LiCoO₂), nickel-based lithium transition metal oxide, lithium manganese oxide (LiMnO₂ or LiMn₂O₄) and a lithium iron phosphate compound (LiFePO₄). Among them, lithium cobalt oxide (LiCoO₂₎ is widely used due to its high operating voltage and large capacity advantages, and is used as a positive electrode active material for high voltage. However, cobalt (Co) has a limitation on the use in a large amount as a power source in the field of electric vehicles due to its price rise and unstable supply, and thus there is a need for development of an alternative positive electrode active material, and in particular, a positive electrode active material of Ni-rich lithium composite transition metal oxide is gaining attention due to its high capacity.

The commercially available positive electrode active material of nickel containing lithium composite transition metal oxide comprises secondary particles formed by agglomeration of primary micro particles having the average particle size D50 at a few hundreds of nm level, and to increase the output and the press density, a bimodal positive electrode active material comprising two types of secondary particles having different average particle sizes D50, i.e., secondary macro particles having a large average particle size and secondary micro particles having a small average particle size is commonly used.

The secondary particles formed by agglomeration of primary micro particles have a large specific surface area and a low particle strength. Additionally, when the bimodal positive electrode active material is used to manufacture an electrode, followed by a rolling process, cracking of the secondary macro particle is severe and a large amount of gas is produced during the cell operation, resulting in low stability. In the case of high-Ni lithium transition metal oxide having high nickel content to ensure high capacity, due to its structural problem, when particle cracking occurs, chemical stability reduces and it is difficult to ensure thermal stability.

### DISCLOSURE

### Technical Problem

According to an embodiment of the present disclosure, the present disclosure is directed to providing a Ni-rich lithium transition metal oxide positive electrode active material comprising secondary particles having different average particle sizes, with reduced cracking in a rolling process and improved life characteristics.

According to another embodiment of the present disclosure, the present disclosure is further directed to providing a method for manufacturing a Ni-rich lithium transition metal oxide positive electrode active material comprising secondary particles having different average particle sizes, with reduced cracking in a rolling process and improved life characteristics.

According to still another embodiment of the present disclosure, the present disclosure is further directed to providing a positive electrode and a lithium secondary battery comprising the high-Ni lithium transition metal oxide positive electrode active material having the above-described features.

### Technical Solution

An aspect of the present disclosure provides a positive electrode active material for a lithium secondary battery according to the following embodiments.

A first embodiment relates to a positive electrode active material for a lithium secondary battery comprising secondary micro particles having an average particle size D50 of 1 to 10 *µ*m formed by agglomeration of primary macro particles having an average particle size D50 of 0.5 to 3 *µ*m and a lithium-M oxide coating layer on all or part of a surface, wherein M is at least one selected from the group consisting of boron, cobalt, manganese and magnesium; and secondary macro particles having an average particle size D50 of 5 to 20 *µ*m formed by agglomeration of primary micro particles having a smaller average particle size D50 than the primary macro particles, wherein the primary macro particles and the primary micro particles are represented by LiₐNi_{1-b-c-d}Co_{b}Mn_{c}Q_{d}O_{2+δ} (1.0≤a≤1.5, 0<b<0.2, 0<c<0.2, 0≤d≤0.1, 0<b+c+d≤0.2, -0.1≤δ≤1.0, Q is at least one type of metal selected from the group consisting of Al, Mg, V, Ti and Zr).

According to the first embodiment, a second embodiment relates to the positive electrode active material for a lithium secondary battery, wherein the average particle size D50 of the secondary macro particles:the average particle size D50 of the secondary micro particles is 5: 1 to 2:1.

According to the first or second embodiment, a third embodiment relates to the positive electrode active material for a lithium secondary battery, wherein the secondary micro particles are present in an amount of 10 to 100 parts by weight based on 100 parts by weight of the secondary macro particles.

According to any one of the first to third embodiments, a fourth embodiment relates to the positive electrode active material for a lithium secondary battery, wherein M in the lithium-M oxide coating layer is at least one selected from the group consisting of boron and cobalt.

According to any one of the first to fourth embodiments, a fifth embodiment relates to the positive electrode active material for a lithium secondary battery, wherein M in the lithium-M oxide coating layer is present in an amount of 0.05 to 10 parts by weight based on 100 parts by weight of the secondary micro particles.

According to any one of the first to fifth embodiments, a sixth embodiment relates to the positive electrode active material for a lithium secondary battery, wherein a bonding strength between the primary macro particles of the secondary micro particles is smaller than a bonding strength between the primary micro particles of the secondary macro particles.

Another aspect of the present disclosure provides a method for manufacturing a positive electrode active material for a lithium secondary battery according to the following embodiments.

A seventh embodiment relates to a method for manufacturing a positive electrode active material for a lithium secondary battery comprising (S1) mixing a transition metal containing solution comprising nickel, cobalt, manganese and Q (Q is at least one type of metal selected from the group consisting of Al, Mg, V, Ti and Zr) at a predetermined mole ratio, an ammonia aqueous solution and a basic aqueous solution to form a transition metal hydroxide precursor particle, followed by separation and drying, and grinding the transition metal hydroxide precursor particle to a predetermined average particle size D50; (S2) mixing the ground transition metal hydroxide precursor particle with a lithium raw material and sintering in an oxygen atmosphere to prepare a core micro particle formed by agglomeration of primary macro particles represented by LiₐNi_{1-b-c-d}Co_{b}Mn_{c}Q_{d}O_{2+δ} (1.0<a<1.5, 0<b<0.2, 0<c<0.2, 0≤d≤0.1, 0<b+c+d≤0.2, -0.1≤δ≤1.0, Q is at least one type of metal selected from the group consisting of Al, Mg, V, Ti and Zr) and having an average particle size D50 of 0.5 to 3 *µ*m; (S3) mixing a solution of precursor comprising at least one selected from the group consisting of boron, cobalt, manganese and magnesium with the core micro particle, spraying and drying using a spray dryer and sintering in an oxygen atmosphere to prepare secondary micro particles having an average particle size D50 of 1 to 10 *µ*m formed by agglomeration of primary macro particles having an average particle size D50 of 0.5 to 3 *µ*m and a lithium-M oxide coating layer (M is at least one selected from the group consisting of boron, cobalt, manganese and magnesium) on all or part of a surface; and (S4) preparing secondary macro particles having an average particle size D50 of 5 to 20 *µ*m formed by agglomeration of primary micro particles having a smaller average particle size D50 than the primary macro particles and represented by LiₐNi_{1-b-c-d}Co_{b}Mn_{c}Q_{d}O_{2+δ} (1.0≤a≤1.5, 0<b<0.2, 0<c<0.2, 0≤d≤0.1, 0<b+c+d≤0.2, -0.1≤δ≤1.0, Q is at least one type of metal selected from the group consisting of Al, Mg, V, Ti and Zr), and mixing the secondary macro particles with the secondary micro particles.

According to the seventh embodiment, an eighth embodiment relates to the method for manufacturing a positive electrode active material for a lithium secondary battery, wherein the average particle size D50 of the secondary macro particles:the average particle size D50 of the secondary micro particles is 5:1 to 2:1.

According to the seventh or eighth embodiment, a ninth embodiment relates to the method for manufacturing a positive electrode active material for a lithium secondary battery, wherein the secondary micro particles are present in an amount of 10 to 100 parts by weight based on 100 parts by weight of the secondary macro particles.

According to any one of the seventh to ninth embodiments, a tenth embodiment relates to the method for manufacturing a positive electrode active material for a lithium secondary battery, wherein M in the lithium-M oxide coating layer is at least one selected from the group consisting of boron and cobalt.

According to any one of the seventh to tenth embodiments, an eleventh embodiment relates to the method for manufacturing a positive electrode active material for a lithium secondary battery, wherein M in the lithium-M oxide coating layer is present in an amount of 0.05 to 10 parts by weight based on 100 parts by weight of the secondary micro particles.

A twelfth embodiment provides a positive electrode for a lithium secondary battery comprising the above-described positive electrode active material.

A thirteenth embodiment provides a lithium secondary battery comprising the above-described positive electrode.

### Advantageous Effects

The positive electrode active material according to an embodiment of the present disclosure comprises secondary macro particles and secondary micro particles at the same time and thus has high press density. Additionally, in the rolling process, before the secondary macro particle cracks, some of the primary particles in the secondary micro particle of the predetermined average particle size formed by agglomeration of primary macro particles having the coating layer on the surface are detached and separated, thereby reducing the cracking of the secondary macro particle. Accordingly, it is possible to improve the life characteristics of lithium secondary batteries comprising the positive electrode active material of the present disclosure.

### DESCRIPTION OF DRAWINGS

The accompanying drawings illustrate the preferred embodiment of the present disclosure, and together with the above description, serve to help a further understanding of the technical aspects of the present disclosure, so the present disclosure should not be construed as being limited to the drawings. Meanwhile, the shape, size, scale or proportion of the elements in the accompanying drawings may be exaggerated to emphasize a more clear description.
FIGS. 1a and 1b are a schematic diagram of a secondary macro particle according to the present disclosure and a scanning electron microscopy (SEM) image of a secondary macro particle used in example 1, respectively.
FIGS. 2a and 2b are a schematic diagram of a secondary micro particle according to the present disclosure and an SEM image of a secondary micro particle used in example 1, respectively.
FIGS. 3a and 3b are a schematic diagram of a monolith used in comparative example 2 and an SEM image of a monolith, respectively.

### BEST MODE

Hereinafter, embodiments of the present disclosure will be described in detail. Prior to the description, it should be understood that the terms or words used in the specification and the appended claims should not be construed as limited to general and dictionary meanings, but interpreted based on the meanings and concepts corresponding to technical aspects of the present disclosure, on the basis of the principle that the inventor is allowed to define terms appropriately for the best explanation. Therefore, the disclosure of the embodiments described herein is just a most preferred embodiment of the present disclosure, but not intended to fully describe the technical aspects of the present disclosure, so it should be understood that a variety of other equivalents and modifications could have been made thereto at the time that the application was filed.

Unless the context clearly indicates otherwise, it will be understood that the term "comprises" when used in this specification, specifies the presence of stated elements, but does not preclude the presence or addition of one or more other elements.

In the specification and the appended claims, "comprising multiple crystal grains" refers to a crystal structure formed by two or more crystal grains having a specific range of average crystal sizes. In this instance, the crystal size of the crystal grain may be quantitatively analyzed using X-ray diffraction analysis (XRD) by Cu Kα X-ray (Xrα). Specifically, the average crystal size of the crystal grain may be quantitatively analyzed by putting a prepared particle into a holder and analyzing diffraction grating for X-ray radiation onto the particle.

In the specification and the appended claims, D50 may be defined as a particle size at 50% of particle size distribution, and may be measured using a laser diffraction method. For example, a method for measuring the average particle size D50 of a positive electrode active material may include dispersing particles of the positive electrode active material in a dispersion medium, introducing into a commercially available laser diffraction particle size measurement device (for example, Microtrac MT 3000), irradiating ultrasound of about 28 kHz with the output power of 60W, and calculating the average particle size D50 corresponding to 50% of cumulative volume in the measurement device.

In the present disclosure, 'primary particle' refers to a particle having seemingly absent grain boundary when observed with the field of view of 5000 to 20000 magnification using a scanning electron microscope.

In the present disclosure, 'secondary particle' is a particle formed by agglomeration of the primary particles.

In the present disclosure, 'monolith' refers to a particle that exists independently of the secondary particle, and has seemingly absent grain boundary, and for example, it is a particle having the particle diameter of 0.5 *µ*m or more.

In the present disclosure, 'particle' may include any one of the monolith, the secondary particle and the primary particle or all of them.

According to an aspect of the present disclosure, there is provided a positive electrode active material for a lithium secondary battery, comprising:
secondary micro particles having the average particle size D50 of 1 to 10 *µ*m formed by agglomeration of primary macro particles having the average particle size D50 of 0.5 to 3 *µ*m and a lithium-M oxide coating layer (M is at least one selected from the group consisting of boron, cobalt, manganese and magnesium) on all or part of the surface; and
secondary macro particles having the average particle size D50 of 5 to 20 *µ*m formed by agglomeration of primary micro particles having a smaller average particle size D50 than the primary macro particles,
wherein the primary macro particles and the primary micro particles are represented by LiₐNi_{1-b-c-d}Co_{b}Mn_{c}Q_{d}O_{2+δ} (1.0≤a≤1.5, 0<b<0.2, 0<c<0.2, 0≤d≤0.1, 0<b+c+d≤0.2, -0.1≤δ≤1.0, Q is at least one type of metal selected from the group consisting of Al, Mg, V, Ti and Zr).

### Secondary macro particle

The secondary macro particle is a secondary particle having the average particle size D50 of 5 to 20 *µ*m formed by agglomeration of primary micro particles having a smaller average particle size D50 than the primary macro particles of the secondary micro particle as described below. The primary micro particle is a positive electrode active material represented by LiₐNi_{1-b-c-d}Co_{b}Mn_{c}Q_{d}O_{2+δ} (1.0≤a≤1.5, 0<b<0.2, 0<c<0.2, 0≤d≤0.1, 0<b+c+d≤0.2, -0.1≤δ≤1.0, Q is at least one type of metal selected from the group consisting of Al, Mg, V, Ti and Zr).

The average particle size D50 of the primary micro particles is smaller than the average particle size D50 of the primary macro particles that form the secondary micro particle, and in general, the primary micro particles have the average particle size D50 at a few hundreds of nm level, for example, 100 to 900 nm.

The average particle size D50 of the secondary macro particle is 5 to 20 *µ*m, and is larger than the average particle size D50 of the secondary micro particle as described below.

The secondary macro particle having the above-described size is a particle commonly used as a macro particle of a bimodal positive electrode active material, and is prepared by the commonly used preparation method as described below.

As described above, the secondary macro particle formed by agglomeration of primary micro particles has a large specific surface area and low particle strength. Accordingly, when the secondary macro particle is mixed with the secondary micro particle formed by agglomeration of primary micro particles and having a smaller average particle size than the secondary macro particle and the mixture is used to manufacture an electrode, followed by a rolling process, cracking of the secondary macro particle is severe and a large amount of gas is produced during the cell operation, resulting in low stability.

The inventors solved this problem by mixing the secondary macro particle with the secondary micro particle as described below.

### Secondary micro particle

In addition to the above-described macro particle, the positive electrode active material of the present disclosure comprises secondary micro particle having the average particle size D50 of 1 to 10 *µ*m formed by agglomeration of primary macro particles having the average particle size D50 of 0.5 to 3 *µ*m and the lithium-M oxide coating layer (M is at least one selected from the group consisting of boron, cobalt, manganese and magnesium) on all or part of the surface.

The positive electrode active material comprising the secondary macro particle and the secondary micro particle at the same time has improved press density.

The secondary micro particle according to an aspect of the present disclosure refers to a particle agglomerate formed by agglomeration of a plurality of primary macro particles having the coating layer.

The secondary micro particle is formed by agglomeration of primary macro particles having the average particle size D50 of 0.5 to 3 *µ*m and the lithium-M oxide coating layer ((M is at least one selected from the group consisting of boron, cobalt, manganese, and magnesium) on all or part of the surface, and its detailed description will be provided below.

The primary macro particle that forms the secondary micro particle according to an aspect of the present disclosure has a larger average particle size D50 than the primary micro particle that forms the secondary macro particle. That is, as opposed to the common type of the existing positive electrode active material, i.e., the secondary particle formed by agglomeration of primary micro particles having a small average particle size, the secondary micro particle is a secondary particle formed by agglomeration of a predetermined number or less of primary particles having the increased size, i.e., primary macro particles.

When compared with the primary micro particle that forms the conventional secondary particle, the primary macro particle has simultaneous growth of the average particle size and the average crystal size of the primary particle.

From the perspective of crack, a seemingly absent grain boundary and a large average particle size like the monolith are advantageous. When only the average particle size D50 of the primary particle is increased by over-sintering, rock salt is formed on the surface of the primary particle and the initial resistance increases. When growing the crystal size of the primary particle together, the resistance reduces. Accordingly, in the present disclosure, the primary macro particle according to an embodiment is a particle having a large average particle size as well as a large average crystal size and a seemingly absent grain boundary.

As described above, the simultaneous growth of the average particle size and the average crystal size of the primary particle reduces the resistance and provides a long life advantage, compared to the monolith having a large resistance increase in the presence of rock salt on the surface due to the sintering at high temperature.

As described above, compared to the monolith, the "secondary micro particle formed by agglomeration of primary macro particles" used in an aspect of the present disclosure is advantageous in terms of the increased size of the primary particle itself, the reduced rock salt formation, and the consequential reduced resistance.

In this instance, the average crystal size of the primary macro particle may be quantitatively analyzed using X-ray diffraction analysis (XRD) by Cu Kα X-ray. Specifically, the average crystal size of the primary macro particle may be quantitatively analyzed by putting the prepared particle into a holder and analyzing diffraction grating for X-ray radiation onto the particle. The average crystal size of the primary macro particle may be 200 nm or more, specifically 250 nm or more, and more specifically 300 nm or more.

Meanwhile, as the coating layer is formed on the surface of all or some of the plurality of primary macro particles, the coating layer connected to completely fill the gap of the primary macro particles may be included as an example of coating layer. Preferably, the coating layer is formed on the surface of all the plurality of primary macro particles, and completely fills the gap of the primary macro particles.

The bonding strength between the primary macro particles having the coating layer is weaker than a force that breaks down the secondary macro particle. That is, the bonding strength between the primary macro particles of the secondary micro particle is smaller than the bonding strength between the primary micro particles of the secondary macro particle.

Accordingly, in the rolling process, before the secondary macro particle cracks, the primary macro particle of the secondary micro particle is detached and separated, thereby reducing the cracking of the secondary macro particle. The separated particle itself has high strength, and thus does not crack, and as opposed to the primary micro particle that forms the secondary macro particle, the exposed surface has the lithium-M oxide coating layer and thus there is very little reduction in life characteristics.

M in the lithium-M oxide coating layer may be at least one selected from the group consisting of boron and cobalt. Additionally, M in the lithium-M oxide coating layer may be present in an amount of 0.05 to 10 parts by weight based on 100 parts by weight of the secondary micro particle, but is not limited thereto.

The lithium-M oxide coating layer is formed by reaction between an M containing precursor for forming the coating layer and lithium impurities remaining on the surface of the primary macro particle under an oxygen atmosphere as described above. The coating layer may be formed in a stable spinel phase. Accordingly, it is possible to reduce the amount of lithium impurity remaining on the surface by the conversion of the lithium impurities to lithium-M oxide, thereby solving the output reduction problem without treatment of the secondary micro particle through a washing process.

### Positive electrode active material comprising secondary macro particle and secondary micro particle

In the positive electrode active material comprising the secondary macro particle and the secondary micro particle having the above-described characteristics at the same time according to the present disclosure, the average particle size D50 of the secondary macro particle:the average particle size D50 of the secondary micro particle may be 5:1 to 2:1. Additionally, the secondary micro particle may be present in an amount of 10 to 100 parts by weight based on 100 parts by weight of the secondary macro particle.

In addition to the secondary macro particle and the secondary micro particle having the above-described characteristics, the positive electrode active material may further include a positive electrode active material having a different average particle size without hindering the object of the present disclosure.

### Method for manufacturing the positive electrode active material

The positive electrode active material according to an aspect of the present disclosure may be manufactured by the following method. However, the present disclosure is not limited thereto.

A transition metal containing solution comprising nickel, cobalt, manganese and Q (Q is at least one type of metal selected from the group consisting of Al, Mg, V, Ti and Zr) at a predetermined mole ratio, an ammonia aqueous solution and a basic aqueous solution are mixed to form a transition metal hydroxide precursor particle, followed by separation and drying, and the transition metal hydroxide precursor particle is ground to a predetermined average particle size D50 (step S1).

Q is optional, and the following detailed description will be made based on an example in which Q is not included.

First, a positive electrode active material precursor comprising nickel (Ni), cobalt (Co) and manganese (Mn) is prepared.

In this instance, the precursor for preparing the positive electrode active material may be a commercially available positive electrode active material precursor, or may be prepared by a method for preparing a positive electrode active material precursor well-known in the corresponding technical field.

For example, the precursor may be prepared by adding an ammonium cation containing chelating agent and a basic compound to a transition metal solution comprising a nickel containing raw material, a cobalt containing raw material and a manganese containing raw material, to cause coprecipitation reaction.

The nickel containing raw material may include, for example, nickel containing acetate, nitrate, sulfate, halide, sulfide, hydroxide, oxide or oxyhydroxide, and specifically, may include at least one of Ni(OH)₂, NiO, NiOOH, NiCO₃ • 2Ni(OH)₂ • 4H₂O, NiC₂O₂ • 2H₂O, Ni(NO₃)₂ • 6H₂O, NiSO₄, NiSO₄ • 6H₂O, an aliphatic acid nickel salt or nickel halide, but is not limited thereto.

The cobalt containing raw material may include cobalt containing acetate, nitrate, sulfate, halide, sulfide, hydroxide, oxide or oxyhydroxide, and specifically, may include at least one of Co(OH)₂, CoOOH, Co(OCOCH₃)₂ • 4H₂O, Co(NO₃)₂ • 6H₂O, CoSO₄ or Co(SO₄)₂ • 7H₂O, but is not limited thereto.

The manganese containing raw material may include, for example, at least one of manganese containing acetate, nitrate, sulfate, halide, sulfide, hydroxide, oxide or oxyhydroxide, and specifically, may include, for example, at least one of manganese oxide such as Mn₂O₃, MnO₂, Mn₃O₄; a manganese salt such as MnCO₃, Mn(NO₃)₂, MnSO₄, manganese acetate, a manganese salt of dicarboxylic acid, manganese citrate and an aliphatic acid manganese salt; manganese oxyhydroxide or manganese chloride, but is not limited thereto.

The transition metal solution may be prepared by adding the nickel containing raw material, the cobalt containing raw material and the manganese containing raw material to a solvent, to be specific, water, or a mixed solvent of water and an organic solvent (for example, alcohol, etc.) that mixes with water to form a homogeneous mixture, or may be prepared by mixing an aqueous solution of the nickel containing raw material, an aqueous solution of the cobalt containing raw material and the manganese containing raw material.

The ammonium cation containing chelating agent may include, for example, at least one of NH₄OH, (NH₄)₂SO₄, NH₄NO₃, NH₄Cl, CH₃COONH₄ or (NH₄)₂CO₃, but is not limited thereto. Meanwhile, the ammonium cation containing chelating agent may be used in the form of an aqueous solution, and in this instance, the solvent may include water or a mixture of water and an organic solvent (specifically, alcohol, etc.) that mixes with water to form a homogeneous mixture.

The basic aqueous solution is a basic compound and may be an aqueous solution of at least one of hydroxide or hydrate of alkali metal or alkaline earth metal such as NaOH, KOH or Ca(OH)₂. In this instance, the solvent may include water, or a mixture of water and an organic solvent (specifically, alcohol, etc.) that mixes with water to form a homogeneous mixture.

The basic aqueous solution may be added to control the pH of the reaction solution, and may be added in such an amount that the pH of the metal solution is 9 to 12.

The transition metal hydroxide precursor particle may be prepared through coprecipitation reaction of the mixture of the transition metal containing solution comprising nickel, cobalt and manganese, the ammonia aqueous solution and the basic aqueous solution as described above.

In this instance, the coprecipitation reaction may be performed at 25°C to 60°C in an inert atmosphere of nitrogen or argon.

The prepared transition metal hydroxide precursor particle is separated from a reactor and dried, and then ground to a predetermined average particle size D50 to form the secondary micro particle having the intended average particle size through a process described below.

Subsequently, the ground transition metal hydroxide precursor particle is mixed with a lithium raw material and sintered in an oxygen atmosphere to prepare a core micro particle formed by agglomeration of primary macro particles represented by LiₐNi_{1-b-c-d}Co_{b}Mn_{c}Q_{d}O_{2+δ} (1.0≤a≤1.5, 0<b<0.2, 0<c<0.2, 0≤d≤0.1, 0<b+c+d≤0.2, -0.1≤δ≤1.0, Q is at least one type of metal selected from the group consisting of Al, Mg, V, Ti and Zr) and having the average particle size D50 of 0.5 to 3 *µ*m (step S2).

The core micro particle formed by agglomeration of primary macro particles having the predetermined average particle size may be prepared by preparing-grinding-sintering the precursor particle by the steps (S1) and (S2).

In the step S2, the lithium raw material may include, without limitation, any type of material that dissolves in water, and may include, for example, lithium containing sulfate, nitrate, acetate, carbonate, oxalate, citrate, halide, hydroxide or oxyhydroxide. Specifically, the lithium raw material may include at least one of Li₂CO₃, LiNO₃, LiNO₂, LiOH, LiOH • H₂O, LiH, LiF, LiCl, LiBr, LiI, CH₃COOLi, Li₂O, Li₂SO₄, CH₃COOLi, or Li₃C₆H₅O₇.

In the case of high-Ni NCM based lithium composite transition metal oxide having the nickel (Ni) content of 80 mol% or more, sintering may be performed at 790 to 950°C, and may be performed in an oxygen atmosphere for 5 to 35 hours. In the present disclosure, the oxygen atmosphere refers to an atmosphere comprising a sufficient amount of oxygen to sinter comprising the ambient atmosphere. In particular, sintering is preferably performed in an atmosphere in which the partial pressure of oxygen is higher than the ambient atmosphere.

Subsequently, a solution of precursor comprising at least one selected from the group consisting of boron, cobalt, manganese and magnesium is mixed with the core micro particle, sprayed and dried using a spray dryer and sintered in an oxygen atmosphere to prepare a secondary micro particle having the average particle size D50 of 1 to 10 µm formed by agglomeration of primary macro particles having the average particle size D50 of 0.5 to 3 *µ*m and the lithium-M oxide coating layer (M is at least one selected from the group consisting of boron, cobalt, manganese and magnesium) on all or part of the surface (step S3).

The precursor comprising boron may be, for example, boric acid (H₃BO₃), and the precursor comprising cobalt may be, for example, cobalt nitrate. The solution of precursor may be prepared by, for example, dissolving the precursor in a solvent such as DI water and ethanol.

When the solution of precursor is mixed with the core micro particle prepared by the step (S2) and sprayed and dried using the spray dryer, particles formed by agglomeration of the plurality of core micro particles coated with the precursor to a desired size may be prepared.

The lithium-M oxide coating layer is formed on the surface of all or some of the particles in an oxygen atmosphere.

The lithium-M oxide coating layer is formed by the reaction between an M containing precursor for forming the coating layer and lithium impurities remaining on the surface of the core micro particle under the oxygen atmosphere. The coating layer may be formed in a stable spinel phase. Accordingly, it is possible to reduce the amount of lithium impurities without treatment of the secondary micro particle through a washing process by the conversion of the lithium impurities remaining on the surface to lithium-M oxide, thereby preventing the output reduction.

The sintering for forming the coating layer may be performed at 350 to 600°C for 3 to 6 hours, but is not limited thereto.

The secondary micro particle having the above-described properties may be prepared by the above-described steps (S1) to (S3).

The prepared secondary micro particle may be mixed with the secondary macro particle having the average particle size D50 of 5 to 20 *µ*m formed by agglomeration of primary micro particles having a smaller average particle size D50 than the primary macro particle and represented by LiₐNi_{1-b-c-d}Co_{b}Mn_{c}Q_{d}O_{2+δ} (1.0≤a≤1.5, 0<b<0.2, 0<c<0.2, 0≤d≤0.1, 0<b+c+d≤0.2, -0.1≤δ≤1.0, Q is at least one type of metal selected from the group consisting of Al, Mg, V, Ti and Zr) to manufacture the positive electrode active material of the present disclosure.

The secondary macro particle may be a commercially available secondary macro particle, or may be directly prepared using the coprecipitation method known in the corresponding technical field. More specifically, the secondary macro particle may be prepared by obtaining a secondary particle comprising Ni-rich composite transition metal hydroxide particles as a precursor using the coprecipitation method well-known in the corresponding technical field, and mixing the precursor with a lithium source and sintering. Here, the method for controlling the precursor composition using the coprecipitation method and the type of lithium source may be based on the common knowledge in the corresponding technical field.

### Positive electrode and lithium secondary battery

According to another embodiment of the present disclosure, there are provided a positive electrode for a lithium secondary battery and a lithium secondary battery comprising the positive electrode active material.

Specifically, the positive electrode comprises a positive electrode current collector and a positive electrode active material layer comprising the above-described positive electrode active material of the present disclosure, formed on the positive electrode current collector.

In the positive electrode, the positive electrode current collector is not limited to a particular type and may include any type of material having conductive properties without causing any chemical change to the battery, for example, stainless steel, aluminum, nickel, titanium, sintered carbon or aluminum or stainless steel treated with carbon, nickel, titanium or silver on the surface. Additionally, the positive electrode current collector may be generally 3 to 500 *µ*m in thickness, and may have microtexture on the surface to improve the adhesion strength of the positive electrode active material. For example, the positive electrode current collector may come in various forms, for example, films, sheets, foils, nets, porous bodies, foams and non-woven fabrics.

In addition to the above-described positive electrode active material, the positive electrode active material layer may further comprise a positive electrode active material in the form of a macro monolith or a secondary particle formed by agglomeration of primary micro particles, and may comprise a conductive material and a binder.

In this instance, the conductive material is used to impart conductivity to the electrode, and may include, without limitation, any type of conductive material having the ability to conduct electrons without causing any chemical change to the battery. Specific examples of the conductive material may include at least one of graphite, for example, natural graphite or artificial graphite; carbon-based materials, for example, carbon black, acetylene black, ketjen black, channel black, furnace black, lamp black, thermal black and carbon fibers; metal powder or metal fibers, for example, copper, nickel, aluminum and silver; conductive whiskers, for example, zinc oxide and potassium titanate; conductive metal oxide, for example, titanium oxide; or conductive polymers, for example, polyphenylene derivatives. In general, the conductive material may be included in an amount of 1 to 30 weight% based on the total weight of the positive electrode active material layer.

Additionally, the binder serves to improve the bonds between the positive electrode active material particles and the adhesion strength between the positive electrode active material and the positive electrode current collector. Specific examples of the binder may include at least one of polyvinylidene fluoride (PVDF), polyvinylidene fluoride-hexafluoropropylene copolymer (PVDF-co-HFP), polyvinylalcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or a variety of copolymers thereof. The binder may be included in an amount of 1 to 30 weight% based on the total weight of the positive electrode active material layer.

The positive electrode may be manufactured by the commonly used positive electrode manufacturing method except using the above-described positive electrode active material. Specifically, the positive electrode may be manufactured by coating a positive electrode active material layer forming composition comprising the positive electrode active material and optionally, the binder and the conductive material on the positive electrode current collector, drying and rolling. In this instance, the type and amount of the positive electrode active material, the binder and the conductive material may be the same as described above.

The solvent may include solvents commonly used in the corresponding technical field, for example, at least one of dimethyl sulfoxide (DMSO), isopropyl alcohol, N-methylpyrrolidone (NMP), acetone or water. The solvent may be used in such an amount to have sufficient viscosity for good thickness uniformity when dissolving or dispersing the positive electrode active material, the conductive material and the binder and coating to manufacture the positive electrode in view of the slurry coating thickness and the production yield.

Alternatively, the positive electrode may be manufactured by casting the positive electrode active material layer forming composition on a support, peeling off a film from the support and laminating the film on the positive electrode current collector.

According to still another embodiment of the present disclosure, there is provided an electrochemical device comprising the positive electrode. Specifically, the electrochemical device may include a battery or a capacitor, and more specifically, a lithium secondary battery.

Specifically, the lithium secondary battery comprises a positive electrode, a negative electrode disposed opposite the positive electrode, a separator interposed between the positive electrode and the negative electrode and an electrolyte, and the positive electrode is the same as described above. Additionally, optionally, the lithium secondary battery may further comprise a battery case in which an electrode assembly comprising the positive electrode, the negative electrode and the separator is received, and a sealing member to seal up the battery case.

In the lithium secondary battery, the negative electrode comprises a negative electrode current collector and a negative electrode active material layer positioned on the negative electrode current collector.

The negative electrode current collector may include any type of material having high conductivity without causing any chemical change to the battery, for example, copper, stainless steel, aluminum, nickel, titanium, sintered carbon, copper or stainless steel treated with carbon, nickel, titanium or silver on the surface and an aluminum-cadmium alloy, but is not limited thereto. Additionally, the negative electrode current collector may be generally 3 to 500 *µ*m in thickness, and in the same way as the positive electrode current collector, the negative electrode current collector may have microtexture on the surface to improve the bonding strength of the negative electrode active material. For example, the negative electrode current collector may come in various forms, for example, films, sheets, foils, nets, porous bodies, foams and non-woven fabrics.

In addition to the negative electrode active material, the negative electrode active material layer optionally comprises a binder and a conductive material. For example, the negative electrode active material layer may be formed by coating a negative electrode forming composition comprising the negative electrode active material, and optionally the binder and the conductive material on the negative electrode current collector and drying, or by casting the negative electrode forming composition on a support, peeling off a film from the support and laminating the film on the negative electrode current collector.

The negative electrode active material may include compounds capable of reversibly intercalating and deintercalating lithium. Specific examples of the negative electrode active material may include at least one of a carbonaceous material, for example, artificial graphite, natural graphite, graphitizing carbon fibers, amorphous carbon; a metallic substance that can form alloys with lithium, for example, Si, Al, Sn, Pb, Zn, Bi, In, Mg, Ga, Cd, Si alloy, Sn alloy or Al alloy; metal oxide capable of doping and undoping lithium such as SiOβ (0 < β < 2), SnO₂, vanadium oxide, lithium vanadium oxide; or a complex comprising the metallic substance and the carbonaceous material such as a Si-C complex or a Sn-C complex. Additionally, a metal lithium thin film may be used for the negative electrode active material. Additionally, the carbon material may include low crystalline carbon and high crystalline carbon. The low crystalline carbon typically includes soft carbon and hard carbon, and the high crystalline carbon typically includes high temperature sintered carbon, for example, amorphous, platy, flaky, spherical or fibrous natural graphite or artificial graphite, Kish graphite, pyrolytic carbon, mesophase pitch based carbon fiber, meso-carbon microbeads, mesophase pitches and petroleum or coal tar pitch derived cokes.

Additionally, the binder and the conductive material may be the same as those of the above-described positive electrode.

Meanwhile, in the lithium secondary battery, the separator separates the negative electrode from the positive electrode and provides a passage for movement of lithium ions, and may include, without limitation, any separator commonly used in lithium secondary batteries, and in particular, preferably the separator may have low resistance to the electrolyte ion movement and good electrolyte solution wettability. Specifically, the separator may include, for example, a porous polymer film made of polyolefin-based polymer such as ethylene homopolymer, propylene homopolymer, ethylene/butene copolymer, ethylene/hexene copolymer and ethylene/methacrylate copolymer or a stack of two or more porous polymer films. Additionally, the separator may include common porous non-woven fabrics, for example, non-woven fabrics made of high melting point glass fibers and polyethylene terephthalate fibers. Additionally, to ensure the heat resistance or mechanical strength, the coated separator comprising ceramics or polymer materials may be used, and may be selectively used with a single layer or multilayer structure.

Additionally, the electrolyte used in the present disclosure may include an organic liquid electrolyte, an inorganic liquid electrolyte, a solid polymer electrolyte, a gel polymer electrolyte, a solid inorganic electrolyte and a molten inorganic electrolyte, available in the manufacture of lithium secondary batteries, but is not limited thereto.

Specifically, the electrolyte may comprise an organic solvent and a lithium salt.

The organic solvent may include, without limitation, any type of organic solvent that acts as a medium for the movement of ions involved in the electrochemical reaction of the battery. Specifically, the organic solvent may include an ester-based solvent, for example, methyl acetate, ethyl acetate, γ-butyrolactone, ε-caprolactone; an ether-based solvent, for example, dibutyl ether or tetrahydrofuran; a ketone-based solvent, for example, cyclohexanone; an aromatic hydrocarbon-based solvent, for example, benzene, fluorobenzene; a carbonate-based solvent, for example, dimethylcarbonate (DMC), diethylcarbonate (DEC), methylethylcarbonate (MEC), ethylmethylcarbonate (EMC), ethylene carbonate (EC), propylene carbonate (PC); an alcohol-based solvent, for example, ethylalcohol, isopropyl alcohol; nitriles of R-CN (R is C2 to C20 straight-chain, branched-chain or cyclic hydrocarbon, and may comprise an exocyclic double bond or ether bond); amides, for example, dimethylformamide; dioxolanes, for example, 1,3-dioxolane; or sulfolanes. Among them, the carbonate-based solvent is desirable, and more preferably, cyclic carbonate (for example, ethylene carbonate or propylene carbonate) having high ionic conductivity and high dielectric constant which contributes to the improved charge/discharge performance of the battery may be mixed with a linear carbonate-based compound (for example, ethylmethyl carbonate, dimethyl carbonate or diethyl carbonate) of low viscosity. In this case, the cyclic carbonate and the chain carbonate may be mixed at a volume ratio of about 1:1 to about 1:9 to improve the performance of the electrolyte solution.

The lithium salt may include, without limitation, any compound that can provide lithium ions used in lithium secondary batteries. Specifically, the lithium salt may include LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, Lil, or LiB(C₂O₄)₂. The concentration of the lithium salt may range from 0.1 to 2.0M. When the concentration of the lithium salt is included in the above-described range, the electrolyte has the optimal conductivity and viscosity, resulting in good performance of the electrolyte and effective movement of lithium ions.

In addition to the above-described constituent substances of the electrolyte, the electrolyte may further comprise, for example, at least one type of additive of a haloalkylene carbonate-based compound such as difluoro ethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride to improve the life characteristics of the battery, prevent the capacity fading of the battery and improve the discharge capacity of the battery. In this instance, the additive may be included in an amount of 0.1 to 5 weight% based on the total weight of the electrolyte.

The lithium secondary battery comprising the positive electrode active material according to the present disclosure has high discharge capacity and output characteristics and stable capacity retention, and thus is useful in the field of mobile devices including mobile phones, laptop computers and digital cameras, and electric vehicles including hybrid electric vehicles (HEVs).

Accordingly, according to another embodiment of the present disclosure, there are provided a battery module comprising the lithium secondary battery as a unit cell and a battery pack comprising the same.

The battery module or the battery pack may be used as a power source of at least one medium-large scale device of power tools; electric vehicles comprising electric vehicles (EVs), hybrid electric vehicles, and plug-in hybrid electric vehicles (PHEVs); or energy storage systems.

Hereinafter, the embodiments of the present disclosure will be described in sufficiently detail for those having ordinary skill in the technical field pertaining to the present disclosure to easily practice the present disclosure. However, the present disclosure may be embodied in many different forms and is not limited to the disclosed embodiments.

### <Example 1>

### Preparation of secondary macro particle

A secondary particle comprising Ni-rich composite transition metal hydroxide particles is obtained as a precursor using the coprecipitation method known in the corresponding technical field, and then mixed with a lithium source and sintered to prepare secondary macro particles having the average particle size D50 of 15 µm formed by agglomeration of primary micro particles of LiNi_{0.8}Co_{0.1}Mn_{0.1O2} having the average particle size D50 of a few hundreds of nm.

### Preparation of secondary micro particle

4 liters of distilled water is put into a coprecipitation reactor (capacity 20L), and while the temperature is maintained at 50°C, 100 mL of a 28 weight% ammonia aqueous solution is added, and a transition metal solution with the concentration of 3.2 mol/L in which NiSO₄, CoSO₄ and MnSO₄ are mixed at a mole ratio of nickel:cobalt:manganese of 0.8:0.1:0.1 and a 28 weight% ammonia aqueous solution are continuously put into the reactor at 300 mL/hr and 42 mL/hr, respectively. Stirring is performed at the impeller speed of 400 rpm, and 40 wt% sodium hydroxide solution is fed to maintain the pH at 9. Precursor particles are formed by 10-hour coprecipitation reaction. The precursor particles are separated, washed and dried in an oven of 130°C to prepare a precursor.

Ni_{0.8}Co_{0.1}Mn_{0.1}(OH)₂ precursor synthesized by coprecipitation reaction is put into a mixer and ground to about 1 ,um, the ground precursor is mixed with LiOH at the mole ratio of 1.05, and the mixture is thermally treated at 800°C for 15 hours in an oxygen atmosphere to prepare LiNi_{0.8}Co_{0.1}Mn_{0.1}O₂ lithium composite transition metal oxide.

100g of the prepared positive electrode material is mixed with a solution in which 30g of a coating source H₃BO₃ is dissolved in ethanol, sprayed and dried using a spray dryer, and sintered at 450°C for 5 hours in an oxygen atmosphere to obtain a final secondary micro particle. The obtained secondary micro particle is a particle having the average particle size D50 of 4 *µ*m formed by agglomeration of primary macro particles having the average particle size D50 of 1 *µ*m.

### Preparation of positive electrode active material

The secondary macro particle and the secondary micro particle obtained by the above-described method are mixed at the weight ratio of 7:3 to prepare a bimodal positive electrode active material.

### <Example 2>

### Preparation of secondary macro particle

A secondary macro particle is prepared by the same method as example 1.

### Preparation of secondary micro particle

4 liters of distilled water is put into a coprecipitation reactor (capacity 20L), and while the temperature is maintained at 50°C, 100 mL of a 28 weight% ammonia aqueous solution is added, and a transition metal solution with the concentration of 3.2 mol/L in which NiSO₄, CoSO₄ and MnSO₄ are mixed at a mole ratio of nickel:cobalt:manganese of 0.8:0.1:0.1 and a 28 weight% ammonia aqueous solution are continuously put into the reactor at 300 mL/hr and 42 mL/hr, respectively. Stirring is performed at the impeller speed of 400 rpm, and 40 wt% sodium hydroxide solution is fed to maintain the pH at 9. Precursor particles are formed by 10-hour coprecipitation reaction. The precursor particles are separated, washed and dried in an oven of 130°C to prepare a precursor.

Ni_{0.8}Co_{0.1}Mn_{0.1}(OH)₂ precursor synthesized by coprecipitation reaction is put into a mixer and ground to about 1 *µ*m, the ground precursor is mixed with LiOH at the mole ratio of 1.05, and the mixture is thermally treated at 800°C for 15 hours in an oxygen atmosphere to prepare LiNi_{0.8}Co_{0.1}Mn_{0.1}O₂ lithium composite transition metal oxide.

100g of the prepared positive electrode material is mixed with a solution in which 60g of a coating source H₃BO₃ is dissolved in ethanol, sprayed and dried using a spray dryer, and sintered at 450°C for 5 hours in an oxygen atmosphere to obtain a final secondary micro particle. The obtained secondary micro particle is a particle having the average particle size D50 of 4 *µ*m formed by agglomeration of primary macro particles having the average particle size D50 of 1 *µ*m.

### Preparation of positive electrode active material

The secondary macro particle and the secondary micro particle obtained by the above-described method are mixed at the weight ratio of 7:3 to prepare a bimodal positive electrode active material.

### <Example 3>

### Preparation of secondary macro particle

A secondary macro particle is prepared by the same method as example 1.

### Preparation of secondary micro particle

4 liters of distilled water is put into a coprecipitation reactor (capacity 20L), and while the temperature is maintained at 50°C, 100 mL of a 28 weight% ammonia aqueous solution is added, and a transition metal solution with the concentration of 3.2 mol/L in which NiSO₄, CoSO₄ and MnSO₄ are mixed at a mole ratio of nickel:cobalt:manganese of 0.8:0.1:0.1 and a 28 weight% ammonia aqueous solution are continuously put into the reactor at 300 mL/hr and 42 mL/hr, respectively. Stirring is performed at the impeller speed of 400 rpm, and 40 wt% sodium hydroxide solution is fed to maintain the pH at 9. Precursor particles are formed by 10-hour coprecipitation reaction. The precursor particles are separated, washed and dried in an oven of 130°C to prepare a precursor.

Ni_{0.8}Co_{0.1}Mn_{0.1}(OH)₂ precursor synthesized by coprecipitation reaction is put into a mixer and ground to about 1 *µ*m, the ground precursor is mixed with LiOH at the mole ratio of 1.05, and the mixture is thermally treated at 800°C for 15 hours in an oxygen atmosphere to prepare LiNi_{0.8}Co_{0.1}Mn_{0.1}O₂ lithium composite transition metal oxide.

100g of the prepared positive electrode material is mixed with a solution in which 30g of a coating source (Mn acetate) is dissolved in ethanol, sprayed and dried using a spray dryer, and sintered at 450°C for 5 hours in an oxygen atmosphere to obtain a final secondary micro particle. The obtained secondary micro particle is a particle having the average particle size D50 of 4 *µ*m formed by agglomeration of primary macro particles having the average particle size D50 of 1 *µ*m.

### Preparation of positive electrode active material

The secondary macro particle and the secondary micro particle obtained by the above-described method are mixed at the weight ratio of 7:3 to prepare a bimodal positive electrode active material.

### <Comparative example 1>

The commonly used bimodal positive electrode active material (the weight ratio of the secondary macro particle and the secondary micro particle=7:3) is manufactured using the secondary micro particle having the average particle size D50 of 4 *µ*m formed by agglomeration of the primary micro particles prepared by the method for preparing the secondary macro particle of example 2, instead of the secondary micro particle of example 1.

### <Comparative example 2>

A bimodal positive electrode active material is manufactured by the same method as example 1 except monolith prepared by the following method is used instead of the secondary micro particle of example 1.

4 liters of distilled water is put into a coprecipitation reactor (capacity 20L), and while the temperature is maintained at 50°C, 100 mL of a 28 weight% ammonia aqueous solution is added, and a transition metal solution with the concentration of 3.2 mol/L in which NiSO₄, CoSO₄ and MnSO₄ are mixed at a mole ratio of nickel:cobalt:manganese of 0.8:0.1:0.1 and a 28 weight% ammonia aqueous solution are continuously put into the reactor at 300 mL/hr and 42 mL/hr, respectively. Stirring is performed at the impeller speed of 400 rpm, and 40 wt% sodium hydroxide solution is fed to maintain the pH at 9.5.

Precursor particles are formed by 24-hour coprecipitation reaction. The precursor particles are separated, washed and dried in an oven of 130°C to prepare a precursor.

The prepared precursor is mixed with LiOH such that the Li/Metal(Ni,Co,Mn) mole ratio is 1.15, and the mixed powder is put into an alumina furnace for thermal treatment. Subsequently, sintering is performed at 850°C for 15 hours to prepare a monolithic positive electrode active material (D₅₀=4*µ*m).

### [Experimental example 1: Observation of positive electrode active material]

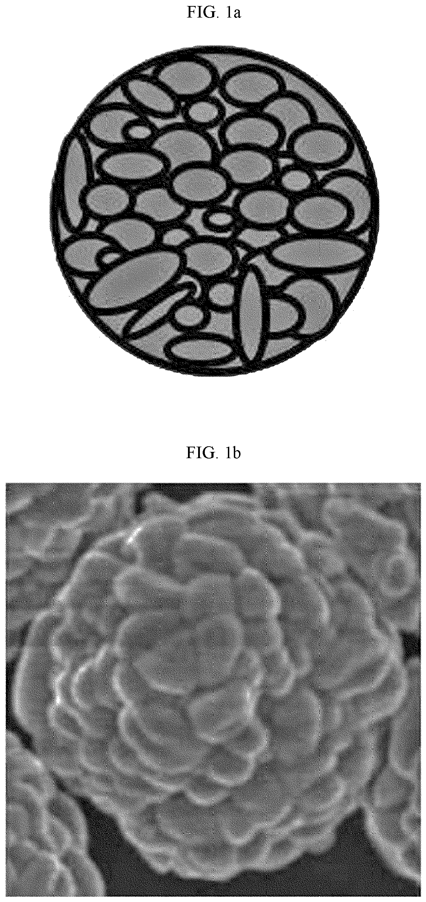

FIGS. 1a and 1b are a schematic diagram of the secondary macro particle according to the present disclosure and a scanning electron microscopy (SEM) image of the secondary macro particle used in example 1, respectively.

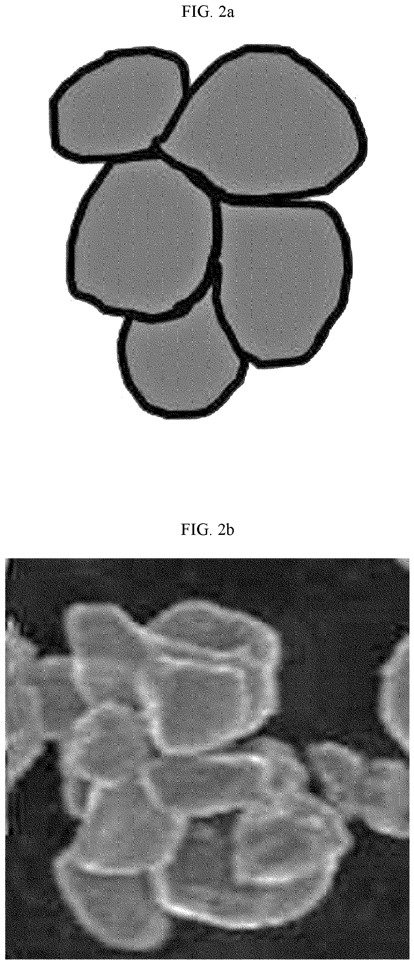

FIGS. 2a and 2b are a schematic diagram of the secondary micro particle according to the present disclosure and an SEM image of the secondary micro particle used in example 1, respectively.

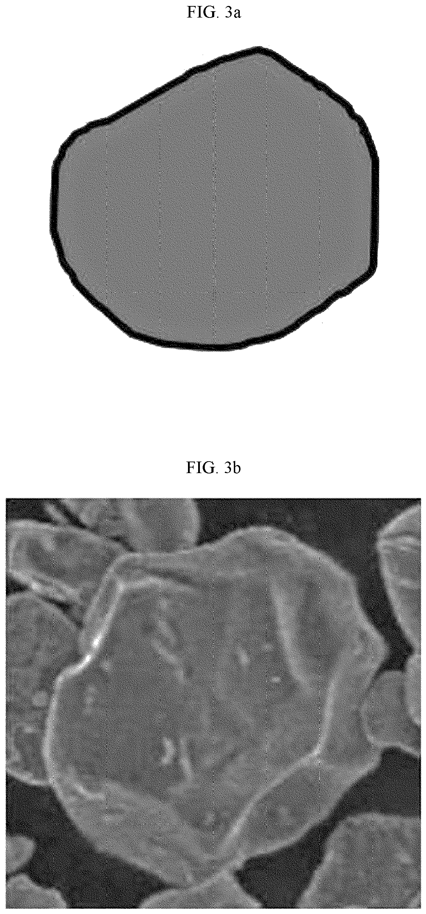

FIGS. 3a and 3b are a schematic diagram of a monolith used in comparative example 2 and an SEM image of a monolith, respectively.

### [Experimental example 2: Average particle size]

D50 may be defined as a particle size at 50% of particle size distribution, and is measured using a laser diffraction method.

### [Experimental example 3: Crystal size of primary particle]

The sample is measured using Bruker Endeavor (Cu Kα, λ= 1.54 A°) equipped with LynxEye XE-T position sensitive detector with the step size of 0.02° in the scan range of 90° FDS 0.5°, 2-theta 15°, to make the total scan time of 20 min.

Rietveld refinement of the measured data is performed, considering the charge at each site (metals at transition metal site +3, Ni at Li site +2) and cation mixing. In crystal size analysis, instrumental broadening is considered using Fundamental Parameter Approach (FPA) implemented in Bruker TOPAS program, and in fitting, all peaks in the measurement range are used. The peak shape fitting is only performed using Lorentzian contribution to First Principle (FP) among peak types available in TOPAS, and in this instance, strain is not considered.

### [Experimental example 4. Measurement of press density]

The press density is measured using HPRM-1000. Specifically, 5g of the positive electrode active material of each of example and comparative example is put into a cylindrical mold, and the pressure of 9 tons is applied to the mold containing the positive electrode active material. Subsequently, the height of the pressed mold is measured using vernier calipers to determine the press density.

The press density of example and comparative example measured by the above-described measurement method is shown in the following table 1.

**[Table 1]**

| | Unit | Example 1 | Example 2 | Example 3 | Comparative example 1 | Comparative example 2 |
|---|---|---|---|---|---|---|
| Pellet Density (@ 9ton) | g/cc | 3.45 | 3.47 | 3.38 | 3.15 | 3.20 |

### [Experimental example 5. Measurement of cracking]

Positive electrodes are manufactured using the positive electrode active materials according to example and comparative example, followed by a rolling process, the rolled electrodes are sintered in a sintering furnace at 500°C for 10 hours, the active material remaining after sintering is only obtained, and an area of 1 *µ*m or less is measured by measuring PSD using Microtrac MT 3000.

**[Table 2]**

| | Unit | Example 1 | Example 2 | Example 3 | Comparative example 1 | Comparative example 2 |
|---|---|---|---|---|---|---|
| Area of 1 *µ*m or less | % | 1.96 | 2.25 | 2.31 | 10.1 | 14.5 |

### [Experimental example 6. Measurement of life characteristics]

Positive electrodes are manufactured using the positive electrode active materials according to example and comparative example, and the capacity retention is measured by the following method. A mixture of artificial graphite and natural graphite at a mix ratio of 5:5 as a negative electrode active material, superC as a conductive material and SBR/CMC as a binder are mixed at a weight ratio of 96:1:3 to prepare a negative electrode slurry, and the negative electrode slurry is coated on one surface of a copper current collector, dried at 130°C and rolled to the porosity of 30% to manufacture a negative electrode.

An electrode assembly including the positive electrode and the negative electrode manufactured as described above and a porous polyethylene separator between the positive electrode and the negative electrode is made and placed in a case, and an electrolyte solution is injected into the case to manufacture a lithium secondary battery.

In this instance, the electrolyte solution is prepared by dissolving 1.0M lithiumhexafluorophosphate (LiPF₆) in an organic solvent comprising ethylenecarbonate/ethylmethylcarbonate/diethylcarbonate/(a mix volume ratio of EC/EMC/DEC=3/4/3).

The life characteristics of the manufactured lithium secondary battery full cell are evaluated by measuring the capacity retention after 100 cycles of charge/discharge test by charging at 0.5C, 45°C in CC-CV mode until 4.2V, and discharging at a constant current of 1C until 3.0V.

**[Table 3]**

| | Unit | Example 1 | Example 2 | Example 3 | Comparative example 1 | Comparative example 2 |
|---|---|---|---|---|---|---|
| Capacity retention (100 CYCLE) | % | 94.9 | 93.5 | 92.8 | 87.5 | 79.2 |

## Claims

1. A positive electrode active material for a lithium secondary battery, comprising:
secondary micro particles having an average particle size (D50) of 1 to 10 *µ*m formed by agglomeration of primary macro particles having an average particle size (D50) of 0.5 to 3 *µ*m and a lithium-M oxide coating layer on all or part of a surface, wherein M is at least one selected from the group consisting of boron, cobalt, manganese and magnesium; and
secondary macro particles having an average particle size (D50) of 5 to 20 *µ*m formed by agglomeration of primary micro particles having a smaller average particle size (D50) than the primary macro particles,
wherein the primary macro particles and the primary micro particles are represented by LiₐNi_{1-b-c-d}Co_{b}Mn_{c}Q_{d}O_{2+δ} ( wherein 1.0≤a≤1.5, 0<b<0.2, 0<c<0.2, 0≤d≤0.1, 0<b+c+d≤0.2, -0.1≤δ≤1.0, Q is at least one type of metal selected from the group consisting of Al, Mg, V, Ti and Zr).

2. The positive electrode active material for a lithium secondary battery according to claim 1, wherein the average particle size (D50) of the secondary macro particles:the average particle size (D50) of the secondary micro particles is 5: 1 to 2:1.

3. The positive electrode active material for a lithium secondary battery according to claim 1, wherein the secondary micro particles are present in an amount of 10 to 100 parts by weight based on 100 parts by weight of the secondary macro particles.

4. The positive electrode active material for a lithium secondary battery according to claim 1, wherein M in the lithium-M oxide coating layer is at least one selected from the group consisting of boron and cobalt.

5. The positive electrode active material for a lithium secondary battery according to claim 1, wherein M in the lithium-M oxide coating layer is present in an amount of 0.05 to 10 parts by weight based on 100 parts by weight of the secondary micro particles.

6. The positive electrode active material for a lithium secondary battery according to claim 1, wherein a bonding strength between the primary macro particles of the secondary micro particles is smaller than a bonding strength between the primary micro particles of the secondary macro particles.

7. A method for manufacturing a positive electrode active material for a lithium secondary battery, comprising:
(S 1) mixing a transition metal containing solution comprising nickel, cobalt, manganese and Q at a predetermined mole ratio, an ammonia aqueous solution and a basic aqueous solution to form a transition metal hydroxide precursor particle, followed by separation and drying, and grinding the transition metal hydroxide precursor particle to a predetermined average particle size (D50); wherein Q is at least one type of metal selected from the group consisting of Al, Mg, V, Ti and Zr;
(S2) mixing the ground transition metal hydroxide precursor particle with a lithium raw material and sintering in an oxygen atmosphere to prepare a core micro particle formed by agglomeration of primary macro particles represented by LiₐNi_{1-b-c-d}Co_{b}Mn_{c}Q_{d}O_{2+δ} (wherein 1.0<a<1.5, 0<b<0.2, 0<c<0.2, 0≤d≤0.1, 0<b+c+d≤0.2, - 0.1≤δ≤1.0, Q is at least one type of metal selected from the group consisting of Al, Mg, V, Ti and Zr) and having an average particle size (D50) of 0.5 to 3 *µ*m;
(S3) mixing a solution of precursor comprising at least one selected from the group consisting of boron, cobalt, manganese and magnesium with the core micro particle, spraying and drying using a spray dryer and sintering in an oxygen atmosphere to prepare secondary micro particles having an average particle size (D50) of 1 to 10 *µ*m formed by agglomeration of primary macro particles having an average particle size (D50) of 0.5 to 3 *µ*m and a lithium-M oxide coating layer on all or part of a surface( wherein M is at least one selected from the group consisting of boron, cobalt, manganese and magnesium); and
(S4) preparing secondary macro particles having an average particle size D50) of 5 to 20 *µ*m formed by agglomeration of primary micro particles having a smaller average particle size (D50) than the primary macro particles and represented by LiₐNi_{1-b-c-d}Co_{b}Mn_{c}Q_{d}O_{2+δ} ( wherein 1.0<a<1.5, 0<b<0.2, 0<c<0.2, 0≤d≤0.1, 0<b+c+d≤0.2, - 0.1≤δ≤1.0, Q is at least one type of metal selected from the group consisting of Al, Mg, V, Ti and Zr), and mixing the secondary macro particles with the secondary micro particles,
wherein the positive electrode active material for a lithium secondary battery is defined in claim 1.

8. The method for manufacturing a positive electrode active material for a lithium secondary battery according to claim 7, wherein the average particle size (D50) of the secondary macro particles:the average particle size (D50) of the secondary micro particles is 5:1 to 2:1.

9. The method for manufacturing a positive electrode active material for a lithium secondary battery according to claim 7, wherein the secondary micro particles are present in an amount of 10 to 100 parts by weight based on 100 parts by weight of the secondary macro particles.

10. The method for manufacturing a positive electrode active material for a lithium secondary battery according to claim 7, wherein M in the lithium-M oxide coating layer is at least one selected from the group consisting of boron and cobalt.

11. The method for manufacturing a positive electrode active material for a lithium secondary battery according to claim 7, wherein M in the lithium-M oxide coating layer is present in an amount of 0.05 to 10 parts by weight based on 100 parts by weight of the secondary micro particles.

12. A positive electrode for a lithium secondary battery comprising the positive electrode active material according to any one of claims 1 to 6.

13. A lithium secondary battery comprising the positive electrode according to claim 12.
